(19) Europäisches Patentamt
European Patent Office
Office européen des brevets

(11) Veröffentlichungsnummer: **0 366 608 B1**

(12) **EUROPÄISCHE PATENTSCHRIFT**

(45) Veröffentlichungstag der Patentschrift: **15.12.93**

(51) Int. Cl.$^5$: **C09D 5/03**, C08G 59/42, C09D 163/00

(21) Anmeldenummer: **89810786.7**

(22) Anmeldetag: **17.10.89**

# (54) Pulverlacke für matte Ueberzüge.

(30) Priorität: **26.10.88 CH 3993/88**

(43) Veröffentlichungstag der Anmeldung:
**02.05.90 Patentblatt 90/18**

(45) Bekanntmachung des Hinweises auf die Patenterteilung:
**15.12.93 Patentblatt 93/50**

(84) Benannte Vertragsstaaten:
**BE CH DE ES FR GB IT LI NL**

(56) Entgegenhaltungen:
**FR-A- 1 445 587**
**US-A- 3 275 599**

(73) Patentinhaber: **CIBA-GEIGY AG**
**Klybeckstrasse 141**
**CH-4002 Basel(CH)**

(72) Erfinder: **Lauterbach, Horst, Dr.**
**Im Mühleboden 78**
**CH-4106 Therwil(CH)**
Erfinder: **Cotting, Jacques-Alain, Dr.**
**Montécu**
**CH-1729 Bonnefontaine(CH)**

**EP 0 366 608 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft Pulverlacke auf der Basis von Epoxidharzen und einem Gemisch aus bestimmten Di-, Tri- oder Tetrakis-($\beta$-carboxyethyl)-cyclohexanonen oder -cyclopentanonen und einem carboxylterminierten gesättigten Polyester, Tolylbiguanid oder Dicyandiamid als Härtungs- und Mattierungsmittel, sowie die Verwendung solcher Pulverlacke für die Herstellung von matten Ueberzügen.
Aus dem GB-Patent 1,033,697 sind unsubstituierte oder alkylsubstituierte Tetrakis-($\beta$-carboxyethyl)-cyclohexanone und -cyclopentanone als Härtungsmittel für Epoxidharzen bekannt. Die gehärteten Harze sind klar und weisen gute mechanische Eigenschaften auf.

Zur Herstellung von matten Oberflächen werden den Pulverharzen bekannterweise Mattierungsmittel zugesetzt. Zusätze, die in lösungsmittelhaltigen Lacken häufig verwendet werden, wie beispielsweise Kieselsäure, Talk, Glimmer, Kreide oder Metallseifen, ergeben bei Pulverlacken nicht den erwünschten Mattierungseffekt. Entweder ist die Reduktion des Glanzgrades ungenügend, oder es muss bei erreichtem Mattierungseffekt eine Verschlechterung der lacktechnischen Filmeigenschaften, wie Haftung, Flexibilität, Schlagfestigkeit oder Chemikalienbeständigkeit, in Kauf genommen werden. Es ist auch bekannt, zur Herstellung von Ueberzügen mit matter Oberfläche Pulverlacke zu verwenden, die ein spezifisches Härtungsmittel enthalten. Beispielsweise wird in der DE-OS 23 24 696 offenbart, als ein solches Härtungsmittel Mono- oder Disalze aus Polycarbonsäuren mit mindestens drei Carboxylgruppen und cyclischen Amidinen einzusetzen. Die Herstellung dieser Amidinsalze ist jedoch technisch aufwendig, weil es Schwierigkeiten macht, die Reaktion so zu steuern, dass auschliesslich Mono- oder Disalze gebildet werden.

Es wurde nun gefunden, dass bei Verwendung von bestimmten Härtungsmittelgemischen auf Basis von Di-, Tri- oder Tetrakis-($\beta$-carboxyethyl)-cyclohexanonen oder -pentanonen oder carboxylgrupenhaltigen Polyacetalen in Epoxidharzpulverlacken eine starke Glanzreduktion ohne wesentliche Beeinträchtigung der übrigen lacktechnischen Eigenschaften erreicht wird. Gegenstand der vorliegenden Erfindung ist ein Pulverlack enthaltend

(a) ein Epoxidharz,

(b) mindestens eine Polycarbonsäure der Formel I oder II

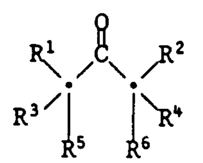

(I)

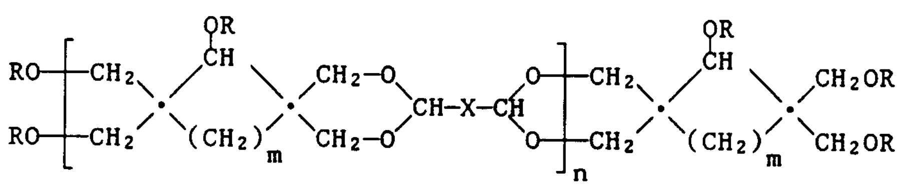

(II),

worin $R^1$, $R^2$, $R^3$ und $R^4$ unabhängig voneinander je ein Wasserstoffatom, $C_1$-$C_4$-Alkyl oder den Rest $-CH_2-CH_2-COOH$ bedeuten, $R^5$ und $R^6$ unabhängig voneinander je ein Wasserstoffatom, $C_1$-$C_4$-Alkyl, den Rest $-CH_2-CH_2-COOH$ oder zusammen eine unsubstituierte oder alkylsubstituierte Methylen- oder Polymethylengruppe mit 1 bis 7 C-Atomen bedeuten, wobei mindestens zwei der Substituenten $R^1$ bis $R^6$ für den Rest $-CH_2-CH_2-COOH$ stehen,
die Substituenten R unabhängig voneinander je für ein Wasserstoffatom oder den Rest

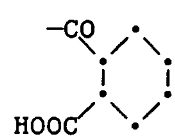

stehen, wobei das Verhältnis der im 2-Carboxyl-cyclohexancarbonylrest enthaltenen Carboxylgruppen zu den RO-Gruppen 0,5 bis 1,0 beträgt, m eine Zahl von 2 bis 5 bedeutet, n einen Wert von Null bis 10 hat und X für eine direkte Bindung, einen aliphatischen oder cycloaliphatischen Rest steht, und

(c) einen carboxylterminierten gesättigten Polyester, Tolylbiguanid oder Dicyandiamid.

Als Komponente (a) können die üblichen, für Pulverbeschichtungen geeigneten Epoxidharze verwendet werden. Solche Verbindungen sind beispielsweise in der DE-OS 28 38 841 beschrieben. Der Inhalt dieser Offenlegungsschrift ist somit Bestandteil vorliegender Erfindung.

Die verwendeten Harze haben vorzugsweise einen Epoxidgehalt von 0,5 bis 12 Aequivalenten pro kg. Die bevorzugten Epoxidharze sind bei Zimmertemperatur fest und können, falls erforderlich, durch Umsetzung mit z.B. einem zweiwertigen Phenol vorverlängert werden.

Bevorzugt sind Epoxidharze, die im Durchschnitt mehr als eine Epoxidgruppe im Molekül enthalten und Polyglycidylderivate von Aromaten oder Heteroaromaten, insbesondere von Aromaten, sind.

Besonders bevorzugte Harze sind gegebenenfalls vorverlängerte Polyglycidylether von 2,2-Bis-(4'-hydroxyphenyl)-propan (Bisphenol A), 2,2-Bis-(3',5'-dibromo-4'-hydroxyphenyl)-propan (Tetrabrombisphenol A), von Bis-(4-hydroxyphenyl)-methan (Bisphenol F) und von Novolaken, Polyglycidylderivate von 4,4'-Diaminodiphenylmethan, von 4,4'-Diaminodiphenylsulfon sowie von 2,4,6-Trihydroxy-1,3,5-triazin (Cyanursäure), wie z.B. Triglycidylisocyanurat.

Die Polycarbonsäuren der Formel I sind bekannte Verbindungen. Beispielsweise werden cycloaliphatische Polycarbonsäuren der Formel I im eingangs genannten GB-Patent 1,033,697 beschrieben. Aliphatische Polycarbonsäuren der Formel I sind beispielsweise aus der DE-OS 26 09 659 bekannt.

In der Formel I bedeuten $R^1$ bis $R^4$ vorzugsweise den Carboxylethylrest und $R^5$ und $R^6$ vorzugsweise zusammen eine unsubstituierte oder alkylsubstituierte Polymethylengruppe mit 2 bis 7 C-Atomen, insbesondere eine unsubstituierte Polymethylengruppe mit 2 bis 4 C-Atomen.
Geeignete Verbindungen der Formel I sind beispielsweise 2,2,6,6-Tetra-(β-carboxylethyl)-cyclopentanon, 2,2,6,6-Tetra-(β-carboxylethyl)-cyclohexanon, 2,2,4,4-Tetra-(β-carboxylethyl)-pentanon-(3) und 1,1,3,3-Tetra-(β-carboxylethyl)-aceton.

Die Verbindungen der Formel II sind in der Literatur noch nicht beschrieben worden und können hergestellt werden, indem man Verbindungen der Formel III

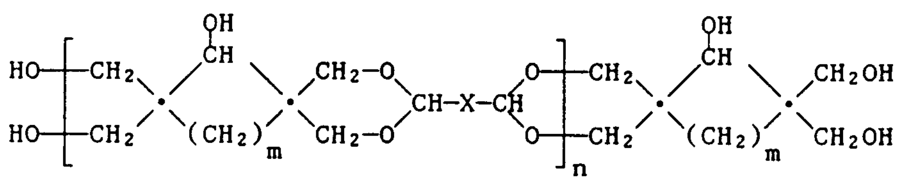 (III),

worin X, m und n die gleiche Bedeutung wie in Formel II haben, mit Hexahydrophthalsäureanhydrid zu einer Verbindung der Formel II umsetzt. Im allgemeinen verwendet man dabei Hexahydrophthalsäure in solchen Mengen, dass mindestens die Hälfte aller HO-Gruppen in den Verbindungen der Formel III in 2-Carboxylcyclohexancarbonyl-Gruppen umgewandelt werden. Vorzugsweise wandelt man dabei mindestens 60 % aller Hydroxylgruppen, insbesondere mindestens 70 % aller Hydroxylgruppen, in den Verbindungen der Formel III in 2-Carboxylcyclohexancarbonyl-Gruppen um.

Die Verbindungen der Formel II, die eigens für die Herstellung der erfindungsgemässen Pulverlacke entwickelt wurden, stellen somit ebenfalls einen Erfindungsgegenstand dar.

In der Formel II bedeutet X vorzugsweise eine direkte Bindung oder einen bis zu 20 C-Atome enthaltenden aliphatischen oder cycloaliphatischen Rest. Insbesondere bedeutet X eine direkte Bindung oder einen aliphatischen Rest mit bis zu 12 C-Atomen. Ferner steht m vorzugsweise für die Zahl 2 oder 3 und bedeutet n vorzugsweise Null oder eine Zahl von 0,1 bis 3.

Verbindungen der Formel III, worin n für die Zahl 1 oder eine Zahl grösser als 1 steht, sind bekannt und können in bekannter Weise nach dem beispielsweise im US-Patent 4,374,953 offenbarten Verfahren hergestellt werden, indem man ein Polyol der Formel IV

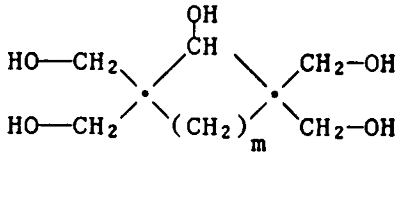 (IV),

worin m die gleiche Bedeutung wie in Formel II bzw. III hat, mit einem aliphatischen oder cycloaliphatischen Dialdehyd oder einem aliphatischen oder cycloaliphatischen Diketon zu einem hydroxylgruppenhaltigen Polycycloacetal oder Polycycloketal der Formel III polykondensiert.

Geeignete Polyole der Formel IV sind beispielsweise die zuvorgenannten Polyole der Formel III, worin n für Null steht. Für das Verfahren geeignete Dialdehyde oder Diketone sind beispielsweise Glyoxal, Glutaraldehyd, Succinaldehyd und 1,4-Cyclohexandion.

Die Polykondensation des Polyols der Formel IV mit dem Dialdehyd oder Diketon zum hydroxylgruppenhaltigen Polycycloacetal der Formel III erfolgt vorzugsweise in einem inerten organischen Lösungsmittel, wie z.B. Toluol, mit einem sauren Katalysator, wie z.B. in Anwesenheit von $H_3PO_2$, und unter gleichzeitiger Entfernung von Wasser aus dem Reaktionsgemisch.

In den erfindungsgemässen härtbaren Gemischen verwendet man als Verbindungen der Formel II ferner vorzugsweise solche, welche eine Erweichungstemperatur von 60 bis 180 °C, vorzugsweise zwischen 80 bis 140 °C aufweisen.

Als Komponente (c) geeignete gesättigte Polyester mit endständigen Carboxylgruppen haben vorzugsweise im Durchschnitt mehr als zwei Carboxylgruppen pro Molekül, eine Säurezahl von 15 bis 100 und ein durchschnittliches Molekulargewicht von 500 bis 10000. Die verwendeten Polyester sind vorzugsweise bei Zimmertemperatur fest und haben eine Glasumwandlungstemperatur von 40 bis 80 °C.

Solche Polyester sind z.B. in der US-Patentschrift 3,397,254 und in der DE Offenlegungsschrift 21 63 962 beschrieben. Sie können z.B. durch Umsetzung von Polyestern mit endständigen Hydroxygruppen mit Tricarbonsäureanhydriden oder Tetracarbonsäuredianhydriden erhalten werden. Die Polyester mit endständigen Hydroxygruppen ihrerseits sind Reaktionsprodukte von Polyolen mit Dicarbonsäuren oder -säureanhydriden und haben zweckmässig einen durchschnittlichen Polymerisationsgrad von wenigstens 3, im allgemeinen von 3 bis 25, vorzugsweise von 5 bis 12.

Geeignete Polyole sind z.B. Ethylenglykol, Glycerin, 1,4-Butandiol, Neopentandiol und Cyclohexandiol.

Geeignete Dicarbonsäuren sind beispielsweise Isophthalsäure, Terephthalsäure, Cyclohexandicarbonsäure, Bernsteinsäure, Glutarsäure, Adipinsäure, Pimelinsäure, Süberinsäure, Azelainsäure oder Sebacinsäure.

Geeignete Tricarbonsäureanhydride sind z.B. Anhydride von aliphatischen Tricarbonsäuren, wie Tricarballylsäure (1,2,3-Propantricarbonsäure), von aromatischen Tricarbonsäuren, wie Trimellitsäure (Benzol-1,2,4-tricarbonsäure) und Hemimellitsäure (Benzol-1,2,3-tricarbonsäure), oder von cycloaliphatischen Tricarbonsäuren, wie 6-Methylcyclohex-4-en-1,2,3-tricarbonsäure. Geeignete Tetracarbonsäuredianhydride sind z.B. Pyromellitsäuredianhydrid oder Benzophenon-3,3′,4,4′-tetracarbonsäuredianhydrid.

Tolylbiguanid und Dicyandiamid, die ebenfalls im erfindungsgemässen Pulverlack als Komponente (c) eingesetzt werden können, sind bekannt und im Handel erhältlich.

Bei Verwendung eines carboxylterminierten gesättigten Polyesters als Komponente (c), wird dieser zusammen mit einer Polycarbonsäure der Formel I oder II bezüglich des Epoxidharzes (a) zweckmässig in etwa stöchiometrischen Mengen eingesetzt, das heisst, das Verhältnis der Summe der Carboxyläquivalente pro Epoxidäquivalent beträgt von 0,5 bis 1,5, vorzugsweise von 0,7 bis 1,3 und insbesondere von 0,8 bis 1,2. Dabei kann im erfindungsgemässen Pulverlack das Verhältnis von einer Polycarbonsäure der Formel I oder II zu dem carboxylterminierten gesättigten Polyester von 1:10 bis 10:1 betragen. Vorzugsweise liegen im erfindungsgemässen Pulverlack die Polycarbonsäure der Formel I oder II und der carboxylterminierte gesättigte Polyester im Verhältnis von 1:5 bis 5:1, insbesondere von 1:3 bis 3:1 vor.

Werden als Komponente (c) Tolylbiguanid oder Dicyandiamid eingesetzt, so beträgt im erfindungsgemässen Pulverlack der Anteil an einer Polycarbonsäure der Formel I oder II im allgemeinen nur 10 bis 90 Aequivalent-%, vorzugsweise 20 bis 80 Aequivalent-%, insbesondere 40 bis 60 Aequivalent-%, der zur vollständigen Aushärtung des Epoxidharzes erforderlichen stöchiometrischen Menge. Der dann noch zur vollständigen Aushärtung des Epoxidharzes erforderliche Anteil an Dicyandiamid oder Tolylbiguanid lässt sich kalkulieren, da dem Fachmann auf dem Gebiet der Epoxidharzformulierungen die zur Härtung eines Epoxidharzes erforderliche Menge an Dicyandiamid oder Tolylbiguanid bekannt ist. Im allgemeinen liegt die Menge dieser Härtungsmittel im Bereich von 5 bis 30 Gewichtsteilen pro 100 Gewichtsteile des Epoxidharzes.

Gegebenenfalls können den erfindungsgemässen Pulverlacken noch Härtungsbeschleuniger zugesetzt werden. Neben tert. Aminen, Mannich-Basen und quaternären Ammonium-Basen sind N-heterocyclische Verbindungen geeignet, wie beispielsweise Pyrazole, Imidazole, Pyrrole, Pyridine, Pyrazine, Indole und Piperidine. Bevorzugt werden Heterocyclen mit mindestens einem tertiären Stickstoffatom im Ring, wie N-substituierte Pyrrole, z.B. N-Methylpyrrol, N-substituierte Pyridine, z.B. N-Methyl-, N-Ethyl- und N-Benzylpyridine, N-substituierte Pyrazine, z.B. N,N′-Dimethyl- und N,N′-Diethylpyrazine, N-substituierte Indole, z.B. N-Methyl- und N-Ethylindole, N-substituierte Piperidine, z.B. N-Methyl-, N-Ethyl- und N-Isopropylpiperidine

und, vorzugsweise Imidazole, wie z.B. Imidazol, N-substituierte Imidazole, z.B. 1-Methylimidazol und 1-(2′,4′-Diamino-s-triazin-6′-ylethyl)-2-methylimidazol (6-[2-(2-Methyl-1H-imidazol-1-yl)-ethyl]-1,3,3-triazin-2,4-diamin), C-substituierte Imidazole, wie z.B. 2-Methylimidazol, 2-Ethylimidazol, 2-n-Propylimidazol, 4-Methylimidazol, 2-Methyl-4-phenylimidazol, 2-Phenylimidazol, 2-Ethyl-4-methylimidazol und Benzimidazol.

Besonders bevorzugte Beschleuniger sind N,N-Dimethyl-1,3-propandiamin, 2,4,6-Tris-(dimethylaminomethyl)phenol, N,N,N′,N′-Tetramethylethylendiamin, Triethylamin, Benzyldimethylamin, 2-Methylimidazol und 2-Ethyl-4-methylimidazol.

Gewünschtenfalls können den Pulverlacken noch weitere in der Lackindustrie übliche Zusätze, wie beispielsweise Lichtschutzmittel, Farbstoffe und insbesondere Entgasungsmittel, Verlaufsmittel und/oder Pigmente, wie vorzugsweise $TiO_2$, beigegeben werden.

Verlaufsmittel sind z.B. Polyvinylacetale, wie Polyvinylbutyral (Movital® B 30 H der HOECHST), Polyethylenglykol, Polyvinylpyrrolidon, Glycerin, Acryl-Mischpolymerisate, wie Modaflow® oder Acrylron® MFP der MONSANTO bzw. der PROTEX.

Als Entgasungsmittel wird vorzugsweise Benzoin eingesetzt.

Die neuen Pulverlacke können durch einfaches Mischen der Bestandteile, z.B. in einer Kugelmühle, hergestellt werden. Eine andere Möglichkeit der Herstellung besteht darin, dass man die Bestandteile zusammen schmilzt, vorzugsweise in einer Spritzmaschine, wie z.B. in einem Buss-Kokneter, und dann die abgekühlte Masse zerkleinert. Die Mischungen weisen vorzugsweise eine Partikelgrösse im Bereich von 0,015 bis 500 µm, und insbesondere von 10-75 µm, auf.

Durch Härtung der erfindungsgemässen Pulverlacke werden matte Ueberzüge erhalten. Dabei wird der Pulverlack auf den zu beschichtenden Gegenstand appliziert und auf mindestens 120 °C, vorzugsweise auf 150 bis 250 °C, erhitzt, um das Harz auszuhärten.

Gegenstand der Erfindung ist auch die Verwendung des erfindungsgemässen Pulverlacks zur Herstellung matter Ueberzüge auf Oberflächen, insbesondere von Metallen, wie z.B. Aluminium oder Stahl.

Zur Herstellung der erfindungsgemässen Pulverlacke gemäss den folgenden Beispielen werden einige Bestandteile wie folgt synthetisiert bzw. formuliert:

2,2,5,5-Tetra-(β-carboxyethyl)-cyclopentanon

Zu 250 g Cyclopentanon und 38 g 40%-iger wässriger KOH in 920 ml tert.-Butylalkohol werden bei 20 °C unter Rühren 633 g Acrylnitril zugetropft. Während des Zutropfens bildet sich ein Niederschlag, und am Ende der Zugabe liegt ein dicker Brei vor, der noch eine Stunde gerührt und dann filtriert wird. Der Filterrückstand wird mit 400 ml Eiswasser gewaschen. Es werden 725 g 2,2,5,5-Tetra-(β-cyanoethyl)-cyclopentanon mit einem Schmelzpunkt von 157-159 °C erhalten.

| Elementaranalyse für $C_{17}H_{20}N_4O$: | | | |
|---|---|---|---|
| Berechnet:<br>Gefunden: | C = 68,90 %<br>C = 68,83 % | H = 6,80 %<br>H = 6,94 % | N = 18,90 %<br>N = 18,00 %. |

466 g des oben erhaltenen Nitrils werden mit 442 g KOH 6 Stunden lang auf 95 °C erhitzt und dann mit 786 g konz. Salzsäure (37%-ig) bei Raumtemperatur auf pH 1 gebracht, wobei sich ein Niederschlag bildet. Der Niederschlag wird abfiltriert und mit 400 ml Eiswasser gewaschen. Es werden 464 g 2,2,5,5-Tetra-(β-carboxyethyl)-cyclopentanon mit einem Schmelzpunkt von 152-155 °C erhalten.

| Elementaranalyse für $C_{17}H_{24}O_9$: | | |
|---|---|---|
| Berechnet:<br>Gefunden: | C = 54,83 %<br>C = 55,53 % | H = 6,50 %<br>H = 6,65 % |

Gehalt an COOH-Gruppen, berechnet: 10,74 Aequivalente/kg,
gefunden: 10,78 Aequivalente/kg.

2,2,4,4-Tetra-(β-carboxyethyl)-pentanon

Unter Anwendung der bei der Herstellung von 2,2,5,5-Tetra-(β-carboxyethyl)-cyclopentanon beschriebenen Arbeitsweise und unter Verwendung von Pentanon-(3) anstelle von Cyclopentanon erhält man 2,2,4,4-

Tetra-($\beta$-carboxyethyl)-pentanon mit einem Schmelzpunkt von 176-178 °C.

| Elementaranalyse für $C_{17}H_{26}O_9$: | | |
|---|---|---|
| Berechnet:<br>Gefunden: | C = 54,49<br>C = 54,22 | H = 6,94<br>H = 7,02 |

Gehalt an COOH-Gruppen, berechnet: 10,68 Aequivalente/kg
gefunden: 10,54 Aequivalente/kg.

2,2,6,6-Tetra-($\beta$-carboxyethyl)-cyclohexanon

Unter Anwendung der bei der Herstellung von 2,2,5,5-Tetra-($\beta$-carboxyethyl)-cyclopentanon beschriebenen Arbeitsweise und unter Verwendung von Cyclohexanon anstelle von Cyclopentanon erhält man 2,2,6,6-Tetra-($\beta$-carboxyethyl)-cyclohexanon mit einem Schmelzpunkt von 174-176 °C.

| Elementaranalyse für $C_{18}H_{26}O_9$: | | |
|---|---|---|
| Berechnet:<br>Gefunden: | C = 55,95 %<br>C = 55,59 % | H = 6,78 %<br>H = 6,75 % |

COOH-Gehalt, berechnet: 10,35 Aequivalente/kg,
gefunden: 10,44 Aequivalente/kg.

Carboxylgruppenhaltiges Polyacetal I

a) 551 g 2,2,6,6-Tetramethylolcyclohexanol-1 und 1,9 g hypophosphorige Säure werden bei 100 °C in 2000 ml Toluol suspendiert. Im Verlauf von 50 Minuten tropft man 455 ml einer 50%-igen wässrigen Glutardialdehydlösung zu. Man setzt durch Erniedrigung des Druckes auf etwa 0,15 bar eine Destillation von Waser über einen Wasserabscheider in Gang. Nach Ende der Wasserabscheidung wird das Reaktionsgemisch bei 1,0 bar weitere 2 Stunden unter Rückfluss erhitzt. Man kühlt das Reaktionsgemisch auf 30 °C ab, dekantiert die Toluolphase, löst das entstandene Produkt in 350 ml Methanol, destilliert das Methanol am Rotationsverdampfer ab und trocknet den Rückstand bei 120 °C und 0,02 bar.
Ausbeute: 640 g (93 % der Theorie mit n = 5,7)
Erweichungspunkt: 147 °C
$\overline{M}_n$ (Gelpermeationschromatographie in THF): 1839, $\overline{M}_w/\overline{M}_n$ = 3,65 Hydroxylgehalt: 5,47 Aeq./kg.
b) 50 g des unter a) hergestellten hydroxylguppenhaltigen Polyacetals werden bei 107 °C in 120 ml Methylisobutylaceton suspendiert. Im Verlauf von 2 Stunden gibt man 34 g Hexahydrophthalsäureanhydrid zu. Das Reaktionsgemisch wird weitere 3 Stunden erhitzt. Das Lösungsmittel wird am Rotationsverdampfer destilliert und bei 90 °C und 0,02 bar getrocknet.
Ausbeute: 75 g (90 % der Theorie)
Erweichungspunkt: 125 °C
$\overline{M}_n$ (Gelpermeationschromatographie in THF): 1636, $\overline{M}_w/\overline{M}_n$ = 3,44 Carboxylgehalt: 2,86 Aeq./kg.

Härtungsbeschleuniger A

Gemisch aus 87,5 Teilen eines carboxylgruppenterminierten, gesättigten, festen Polyesterharzes und 12,5 Teilen Tetradecyltrimethylammoniumbromid.

Beispiel 1:

In einem Extruder (Kokneter der Fa. Buss, Pratteln, CH) wird bei einer Temperatur von 80 °C ein Gemisch aus folgenden Komponenten homogenisiert:
817,6 g eines Bisphenol A-diglycidylethers mit einem Erweichungspunkt (nach DIN 51 920) von 86 °C und einem Epoxidgehalt von 1,3 Aequivalenten/kg,
5,0 g Acrylron® MFP (butyliertes Polyacrylat der Fa. Protex) als Verlaufsmittel,

82,3 g Crylcoat® 314 (carboxylterminierter gesättigter Polyester mit einer Säurezahl von 73 Aequivalenten KOH/g und einer Glasumwandlungstemperatur ($T_G$) von 60 °C (DSC) der Fa. UCB, Belgien),
95,1 g 2,2,5,5-Tetra-(β-carboxyethyl)-cyclopentanon,
2,0 g Benzoin,
500,0 g $TiO_2$ und
20,0 g Härtungsbeschleuniger A.

Das Extrudat wird nach bekannten Standardverfahren zu einer Partikelgrösse von etwa 40 µm gemahlen und elektrostatisch auf ein Aluminiumblech aufgesprüht. Nach dem Einbrennen während 30 Minuten bei 200 °C entsteht ein Lackfilm mit folgenden Eigenschaften:

| | | |
|---|---|---|
| Filmdicke | (µm) | = 61 |
| Erichsentiefziehtest gemäss DIN 53 156 | (mm) | = 9,3 |
| Schlagverformung, rückseitig *) | (cm•kg) | = 80 |
| Glanz (∢ 60°) | (%) | = 0 |
| Gelbwert gemäss DIN 6167 | | = 2,8 |
| Verlauf bei 200°C **) | | = gut/sehr gut. |

*) Auf das beschichtete Aluminiumblech wird von hinten aus bestimmter Höhe ein Stempel mit einem bekannten Gewicht fallengelassen. Der erhaltene Wert, Höhe (cm) mal Gewicht (kg), zeigt den grössten Schlag an, bei dem die Beschichtung noch unbeschädigt bleibt.

**) Testmethode, bei der der Verlauf der Beschichtung visuell bestimmt wird als mässig, gut oder sehr gut.

Beispiel 2:

In genau gleicher Weise wie in Beispiel 1 wird ein Lackpulver durch Mischen folgender Komponenten hergestellt:
762,5 g des Bisphenol A-diglycidylethers gemäss Beispiel 1,
5,0 g Acrylron® MFP
153,5 g Crylcoat® 314
79,0 g 2,2,5,5-Tetra-(β-carboxyethyl)-cyclopentanon,
2,0 g Benzoin,
500,0 g $TiO_2$ und
20,0 g Härtungsbeschleuniger A.

Nach dem Einbrennen während 30 Minuten bei 200 °C weist der Film folgende Eigenschaften auf:

| | |
|---|---|
| Filmdicke (µm) | = 54 |
| Erichsentiefziehtest (mm) | = 8,8 |
| Schlagtest ruckseitig (cm•kg) | = 80 |
| Glanz (∢ 60°) (%) | = 4 |
| Gelbwert (DIN 6167) | = 3,1 |
| Verlauf bei 250 °C | = sehr gut. |

Beispiel 3:

In genau gleicher Weise wie in Beispiel 1 wird ein Lackpulver durch Mischen folgender Komponenten hergestellt:
931,0 g des Bisphenol A-diglycidylethers gemäss Beispiel 1,
5,0 g Acrylron® MFP
30,1 g 2,2,5,5-Tetra-(β-carboxyethyl)-cyclopentanon,
37,7 g Tolylbiguanid,
2,0 g Benzoin und
500,0 g $TiO_2$.

Nach dem Einbrennen während 30 Minuten bei 200 °C weist der Lackfilm folgende Eigenschaften auf:

| | |
|---|---|
| Filmdicke (μm) | = 56 |
| Erichsentiefziehtest (mm) | = 9,5 |
| Schlagtest rückseitig (cm•kg) | = 160 |
| Glanz (∡ 60°) (%) | = 4 |
| Gelbwert (DIN 6167) | = 3,5 |
| Verlauf bei 200 °C | = gut/mässig. |

Beispiel 4:

In genau gleicher Weise wie in Beispiel 1 wird ein Lackpulver durch Mischen folgender Komponenten hergestellt:
876,0 g des Bisphenol A-diglycidylethers gemäss Beispiel 1,
5,0 g Acrylron® MFP
92,0 g carboxylgruppenhaltiges Polyacetal I,
32,0 g Tolylbiguanid,
2,0 g Benzoin und
500,0 g $TiO_2$.

Nach dem Einbrennen während 30 Minuten bei 200 °C weist der Lackfilm folgende Eigenschaften auf:

| | |
|---|---|
| Filmdicke (μm) | = 66 |
| Erichsentiefziehtest (mm) | = 10 |
| Schlagtest rückseitig (cm•kg) | = 40 |
| Glanz (∡ 60°) (%) | = 15 |
| Gelbwert (DIN 6167) | = 6,7 |
| Verlauf bei 200 °C | = sehr gut. |

Beispiel 5:

In gleicher Weise wie in Beispiel 1 wird ein Lackpulver durch Mischen folgender Substanzen hergestellt:
730,0 g Bisphenol A-diglycidylether gemäss Beispiel 1,
5,0 g Acrylron® MFP
27,0 g Tolylbiguanid,
23,0 g 2,2,4,4-Tetra-(β-carboxylethyl)-pentanon-(3),
2,0 g Benzoin und
390,0 g $TiO_2$.

Nach dem Einbrennen während 30 Minuten bei 200 °C weist der Lackfilm folgende Eigenschaften auf:

| | |
|---|---|
| Filmdicke (µm) | = 54 |
| Erichsentiefziehtest (mm) | = 9,3 |
| Schlagtest rückseitig (cm•kg) | = 160 |
| Glanz (∡ 60 °) (%) | = 28 |
| Gelbwert (DIN 6167) | = 4,2 |
| Verlauf bei 200 °C | = gut/mässig. |

## Patentansprüche

**1.** Pulverlack enthaltend
(a) ein Epoxidharz,
(b) mindestens eine Polycarbonsäure der Formel I oder II

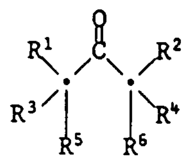

(I)

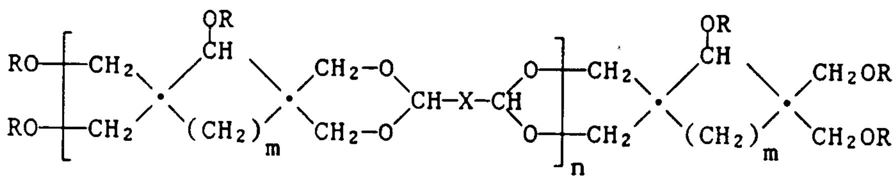

(II),

worin $R^1$, $R^2$, $R^3$ und $R^4$ unabhängig voneinander je ein Wasserstoffatom, $C_1$-$C_4$-Alkyl oder den Rest $-CH_2-CH_2-COOH$ bedeuten, $R^5$ und $R^6$ unabhängig voneinander je ein Wasserstoffatom, $C_1$-$C_4$-Alkyl, den Rest $-CH_2-CH_2-COOH$ oder zusammen eine unsubstituierte oder alkylsubstituierte Methylen- oder Polymethylengruppe mit 1 bis 7 C-Atomen bedeuten, wobei mindestens zwei der Substituenten $R^1$ bis $R^6$ für den Rest $-CH_2-CH_2-COOH$ stehen,
die Substituenten R unabhängig voneinander je für ein Wasserstoffatom oder den Rest

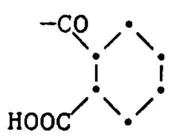

stehen, wobei das Verhältnis der im 2-Carboxylcyclohexancarbonylrest enthaltenen Carboxylgruppen zu den RO-Gruppen 0,5 bis 1,0 beträgt, m eine Zahl von 2 bis 5 bedeutet, n einen Wert von Null bis 10 hat und X für eine direkte Bindung, einen aliphatischen oder cycloaliphatischen Rest steht, und
(c) einen carboxylterminierten gesättigten Polyester, Tolylbiguanid oder Dicyandiamid.

**2.** Pulverlack gemäss Anspruch 1, worin das Epoxidharz (a) im Durchschnitt mehr als eine Epoxidgruppe im Molekül enthält.

**3.** Pulverlack gemäss Anspruch 1, enthaltend eine Polycarbonsäure der Formel I, worin $R^1$ bis $R^4$ den Carboxyethylrest und $R^5$ und $R^6$ zusammen eine unsubstituierte oder alkylsubstituierte Polymethylengruppe mit 2 bis 7 C-Atomen bedeuten.

**4.** Pulverlack gemäss Anspruch 1, enthaltend eine Polycarbonsäure der Formel II, worin X für eine direkte Bindung oder einen bis zu 20 C-Atome enthaltenden aliphatischen oder cycloaliphatischen Rest bedeutet, m für die Zahl 2 oder 3 steht und n Null oder eine Zahl von 0,1 bis 3 bedeutet.

5. Pulverlack gemäss Anspruch 1, enthaltend als Polycarbonsäure der Formel II eine solche mit einer Erweichungstemperatur von 60 bis 180 ° C.

6. Pulverlack gemäss Anspruch 1, worin der carboxylterminierte gesättigte Polyester (c) im Durchschnitt mehr als zwei Carboxylgruppe pro Molekül, eine Säurezahl von 15 bis 100 und ein durchschnittliches Molekulargewicht von 500 bis 10000 hat.

7. Pulverlack gemäss Anspruch 1, worin der carboxylterminierte gesättigte Polyester (c) eine Glasumwandlungstemperatur von 40 bis 80 ° C aufweist.

8. Pulverlack gemäss Anspruch 1, der zusätzlich noch einen Härtungsbeschleuniger enthält.

9. Pulverlack gemäss Anspruch 1, der zusätzlich noch ein Entgasungsmittel, ein Verlaufsmittel und/oder ein Pigment enthält.

10. Verwendung des Pulverlacks gemäss Anspruch 1 zur Herstellung matter Ueberzüge auf Oberflächen, insbesondere von Metallen.

11. Polycarbonsäure der Formel II

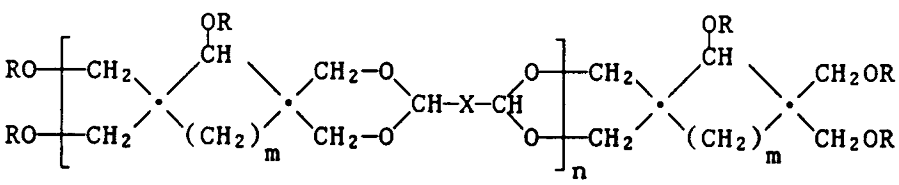

(II),

worin die Substituenten R unabhängig voneinander je für ein Wasserstoffatom oder den Rest

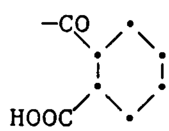

stehen, wobei das Verhältnis der im 2-Carboxylcyclohexancarbonylrest enthaltenen Carboxylgruppen zu den RO-Gruppen 0,5 bis 1,0 beträgt, m eine Zahl von 2 bis 5 bedeutet, n einen Wert von Null bis 10 hat und X für eine direkte Bindung, einen aliphatischen oder cycloaliphatischen Rest steht.

## Claims

1. A powder coating composition comprising
(a) an epoxy resin,

(b) at least one polycarboxylic acid of formula I or II

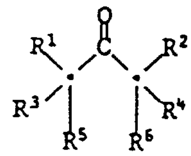

(I)

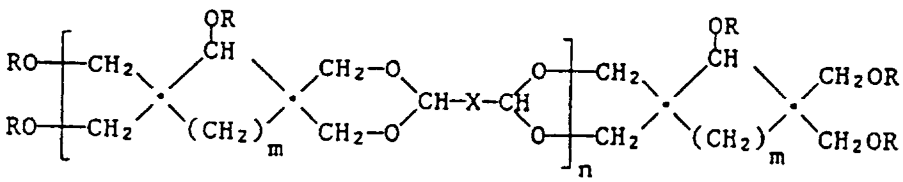

(II),

in which $R^1$, $R^2$, $R^3$ and $R^4$ are each independently of one another a hydrogen atom, $C_1$-$C_4$alkyl or the radical $-CH_2-CH_2-COOH$, $R^5$ and $R^6$ are each independently of the other a hydrogen atom, $C_1$-$C_4$alkyl, the radical $-CH_2-CH_2-COOH$ or, when taken together, are an unsubstituted or alkyl-substituted methylene or polymethylene group, each of 1 to 7 carbon atoms, with the proviso that at least two of the substituents $R^1$ to $R^6$ are the radical $-CH_2-CH_2-COOH$, the substituents R are each independently of one another a hydrogen atom or the radical

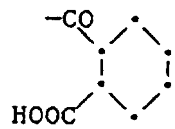,

the ratio of the carboxyl groups present in the 2-carboxycyclohexanecarbonyl radical to the RO groups being 0.5 to 1.0, m is an integer from 2 to 5, n is a value from zero to 10, and X is a direct bond or an aliphatic or cycloaliphatic radical, and

(c) a carboxyl-terminated saturated polyester, tolyl biguanide or dicyandiamide.

**2.** A powder coating composition according to claim 1, in which the epoxy resin (a) contains on average more than one epoxy group in the molecule.

**3.** A powder coating composition according to claim 1, which contains a polycarboxylic acid of formula I, in which $R^1$ to $R^4$ are the carboxyethyl radical and $R^5$ and $R^6$, when taken together, are an unsubstituted or an alkyl-substituted polymethylene group of 2 to 7 carbon atoms.

**4.** A powder coating composition according to claim 1, which contains a polycarboxylic acid of formula II, in which X is a direct bond or an aliphatic or cycloaliphatic radical, each containing up to 20 carbon atoms, m is 2 or 3, and n is zero or a value from 0.1 to 3.

**5.** A powder coating composition according to claim 1, which contains a polycarboxylic acid of formula II which has a softening temperature in the range from 60 to 180 °C.

**6.** A powder coating composition according to claim 1, in which the carboxyl-terminated saturated polyester (c) contains on average more than two carboxyl groups per molecule, has an acid number of 15 to 100, and has an average molecular weight in the range from 500 to 10,000.

**7.** A powder coating composition according to claim 1, in which the carboxyl-terminated saturated polyester (c) has a glass transition temperature in the range from 40 to 80 °C

**8.** A powder coating composition according to claim 1, which additionally contains a curing accelerator.

9. A powder coating composition according to claim 1, which additionally contains a deaerating agent, a levelling agent and/or a pigment.

10. Use of a powder coating composition according to claim 1 for the production of matt coatings on surfaces, especially metal surfaces.

11. A polycarboxylic acid of formula II

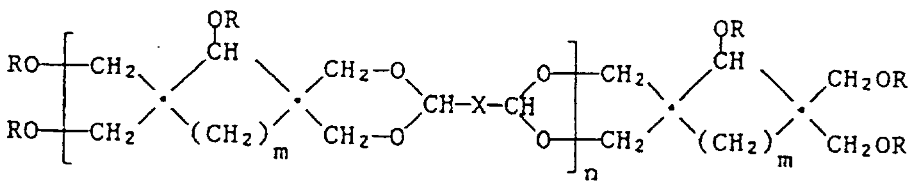 (II),

in which the substituents R are each independently of one another a hydrogen atom or the radical

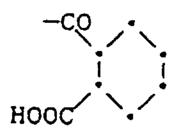,

the ratio of the carboxyl groups present in the 2-carboxycyclohexanecarbonyl radical to the RO groups being 0.5 to 1.0, m is an integer from 2 to 5, n is a value from zero to 10, and X is a direct bond or an aliphatic or a cycloaliphatic radical.

**Revendications**

1. Poudre pour revêtements électrostatiques contenant :
   (a) une résine époxy,
   (b) au moins un acide polycarboxylique répondant aux formule I ou II

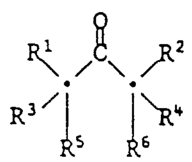 (I)

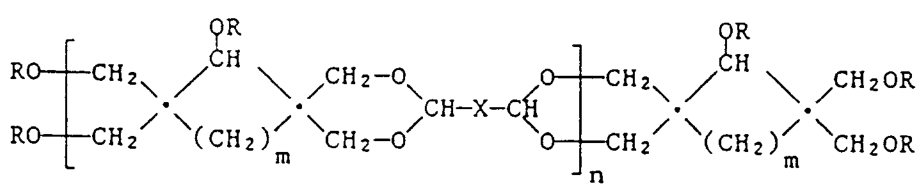 (II),

dans lesquelles $R^1$, $R^2$, $R^3$ et $R^4$ désignent indépendamment les uns des autres chacun un atome d'hydrogène, un groupe alkyle en $C_1$-$C_4$ ou le radical $-CH_2-CH_2-COOH$, $R^5$ et $R^6$ désignent indépendamment l'un de l'autre chacun un atome d'hydrogène, un groupe alkyle en $C_1$-$C_4$, le radical $-CH_2-CH_2-COOH$, ou ensemble un groupe méthylène ou polyméthylène en $C_1$-$C_7$ non-substitué ou alkyl-substitué, au moins deux des substituants $R^1$ à $R^6$ représentant le radical $-CH_2-CH_2-COOH$,
les substituants R désignent chacun indépendamment les uns des autres un atome d'hydrogène ou le radical

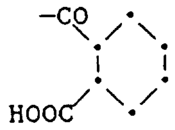

le rapport des groupes carboxyle contenus dans le radical 2-carboxylcyclohexanecarbonyle aux groupes RO étant de 0,5 à 1,0, m désignant un nombre de 2 à 5, n ayant une valeur de 0 à 10 et X étant une liaison directe, un radical aliphatique ou cycloaliphatique, et
(c) un polyester saturé à terminaison carboxyle, le tolylbiguanide ou le dicyandiamide.

2. Poudre pour revêtements électrostatiques selon la revendication 1, dans laquelle la résine époxy (a) contient en moyenne plus d'un groupe époxyde par molécule.

3. Poudre pour revêtements électrostatiques selon la revendication 1, contenant un acide polycarboxylique répondant à la formule I, dans laquelle $R^1$ à $R^4$ désignent le radical carboxyéthyle et $R^5$ et $R^6$ désignent ensemble un groupe polyméthylène en $C_2$-$C_7$ non-substitué ou alkyl-substitué.

4. Poudre pour revêtements électrostatiques selon la revendication 1, contenant un acide polycarboxylique répondant à la formule II, dans laquelle X désigne une liaison directe ou un radical aliphatique ou cycloaliphatique contenant jusqu'à 20 atomes de C, m représente les nombres 2 ou 3 et n désigne 0 ou un nombre de 0,1 à 3.

5. Poudre pour revêtements électrostatiques selon la revendication 1, contenant comme acide polycarboxylique répondant à la formule II un acide polycarboxylique ayant une température de ramollissement de 60 à 180 °C.

6. Poudre pour revêtements électrostatiques selon la revendication 1, dans laquelle le polyester saturé à terminaison carboxyle (c) a en moyenne plus de deux groupes carboxyle par molécule, un indice d'acide de 15 à 100 et une masse moléculaire moyenne de 500 à 10 000.

7. Poudre pour revêtements électrostatiques selon la revendication 1, dans laque le polyester saturé à terminaison carboxyle (c) présente une température de transition vitreuse de 40 à 80 °C.

8. Poudre pour revêtements électrostatiques selon la revendication 1, qui contient en outre un accélérateur de durcissement.

9. Poudre pour revêtements électrostatiques selon la revendication 1, qui contient en outre un agent de dégazage, un agent nivelant et/ou un pigment.

10. Utilisation de la poudre pour revêtements électrostatiques selon la revendication 1 pour la préparation de revêtements mats sur des surfaces, en particulier de métaux.

11. Acide polycarboxylique répondant à la formule II :

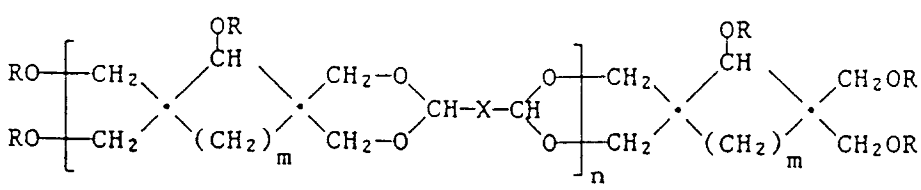 (II),

dans laquelle les substituants R désignent chacun indépendamment les uns des autres un atome d'hydrogène ou le radical

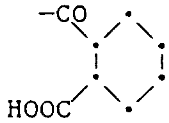

le rapport des groupes carboxyle contenus dans le radical 2-carboxylcyclohexanecarbonyle aux groupes RO étant de 0,5 à 1,0, m désignant un nombre de 2 à 5, n ayant une valeur de 0 à 10 et X étant une liaison directe, un radical aliphatique ou cycloaliphatique.